# FASCICULE DE BREVET EUROPEEN

(11) **EP 1 167 717 B1**
(45) Date de publication et mention de la délivrance du brevet: **27.07.2005**
(21) Numéro de dépôt: 01401410.4
(22) Date de dépôt: 30.05.2001
(51) Int. Cl.: F02B 27/02

(54) **Collecteur d'admission d'air d'un moteur à combustion interne d'un véhicule automobile comportant un conduit d'admission de longueur réglable**
Saugrohr für eine Brennkraftmaschine eines Fahrzeugs versehen mit einem Ansaugkanal einstellbarer Länge
Intake manifold for an internal combustion engine of a vehicle having an inlet pipe of adjustable length

(30) Priorité: 30.06.2000 FR 0008536
(43) Date de publication de la demande: 02.01.2002
(73) Titulaire: Peugeot Citroen Automobiles SA, 92200 Neuilly sur Seine (FR)
(72) Inventeur: Lacour, Denis, 78300 Poissy (FR)
(74) Mandataire: Bouget, Lucien

(56) Documents cités:
- DE-A- 3 518 684
- DE-A- 3 740 403
- DE-C- 4 003 492
- PATENT ABSTRACTS OF JAPAN vol. 011, no. 025 (M-556), 23 janvier 1987 (1987-01-23) -& JP 61 197714 A (NISSAN MOTOR CO LTD), 2 septembre 1986 (1986-09-02)
- PATENT ABSTRACTS OF JAPAN vol. 006, no. 260 (M-180), 18 décembre 1982 (1982-12-18) -& JP 57 153924 A (HINO MOTORS LTD), 22 septembre 1982 (1982-09-22)

## Description

L'invention concerne un collecteur d'admission d'air d'un moteur à combustion interne d'un véhicule automobile comportant un conduit d'admission de longueur réglable.

Les moteurs à combustion interne des véhicules automobiles comportent généralement un collecteur d'admission d'air dans les cylindres du moteur comportant un corps de collecteur, généralement fixé sur la culasse du moteur, ayant une zone d'admission d'air ou plénum et au moins un conduit d'admission d'air joignant la zone d'admission d'air du collecteur à une tubulure d'admission d'air d'un cylindre du moteur. Le collecteur d'admission comporte généralement plusieurs conduits d'admission reliés chacun, au niveau de la culasse du moteur, à une tubulure d'admission d'air d'un cylindre du moteur. Par exemple, dans le cas d'un moteur à quatre cylindres, le collecteur d'admission comporte quatre conduits d'admission reliés chacun à un cylindre du moteur.

La zone d'admission d'air ou plénum du collecteur est généralement alimentée en air par l'intermédiaire d'une conduite d'entrée dans laquelle est disposé un moyen de réglage tel qu'un papillon.

Les collecteurs d'admission des moteurs à combustion interne comportent généralement des conduits d'admission de longueur fixe, dont la longueur est adaptée de manière à obtenir un fonctionnement le plus satisfaisant possible, aussi bien lorsque le moteur est à bas régime que lorsque le moteur est à haut régime, ce compromis étant plus ou moins satisfaisant quant aux performances et au confort acoustique du moteur et devant être adapté à chaque type de moteur défini par son couple à bas et à haut régimes, de manière à obtenir les meilleures performances et la plus faible consommation de carburant possibles.

En effet, le régime acoustique conditionnant l'admission d'air dans le cylindre du moteur dépend de la longueur du conduit d'admission et un régime optimal ne peut être obtenu qu'avec un conduit d'admission dont la longueur est adaptée au régime de fonctionnement du moteur.

De manière à améliorer les performances des moteurs, on a proposé des moyens permettant de faire varier la longueur du conduit d'admission entre les bas régimes et les hauts régimes de fonctionnement des moteurs à combustion interne.

Par exemple, on a proposé, dans le EP-0.571.894, d'utiliser un conduit d'admission comportant, à son extrémité d'entrée, un lobe mobile dont le déplacement permet de faire varier la section et la longueur du conduit en fonctionnement. Toutefois, l'amplitude de variation de la longueur du conduit reste très limitée.

Dans le FR-2.746.446, on a proposé un collecteur comportant deux conduits d'admission de longueurs différentes et un obturateur escamotable placé entre une extrémité de sortie de ces conduits de longueurs différentes dont les extrémités d'entrée communiquent avec la zone d'admission d'air du collecteur et un conduit aval relié à la tubulure d'admission du cylindre du moteur. Un tel dispositif permet tout au plus d'utiliser un premier conduit pour les bas régimes du moteur et un second conduit de longueur inférieure à la longueur du premier conduit pour les hauts régimes. On ne peut donc réaliser une adaptation continue de la longueur du conduit d'admission au régime de fonctionnement du moteur. En outre, l'obturateur escamotable est une pièce de forme complexe.

Le but de l'invention est donc de proposer un collecteur d'admission d'air d'un moteur à combustion interne d'un véhicule automobile comportant un corps de collecteur délimitant une zone d'admission d'air et au moins un conduit d'admission d'air joignant la zone d'admission d'air à une tubulure d'admission d'air d'un cylindre du moteur, ce collecteur comportant un conduit d'admission de longueur réglable de manière continue en fonction du régime de fonctionnement du moteur à combustion interne et présentant ainsi des caractéristiques parfaitement adaptées au fonctionnement du moteur, quel que soit son type, pour tous les régimes de fonctionnement du moteur.

Dans ce but, le conduit d'air comporte une paroi dont une partie au moins de longueur réglable est constituée par un élément souple allongé s'étendant suivant une direction longitudinale axiale du conduit à l'intérieur du collecteur, ayant une extrémité longitudinale aval, dans le sens de circulation de l'air, en prise avec un moyen d'ajustement de la longueur de l'élément souple constituant la partie de longueur réglable de la paroi du conduit d'admission.

Afin de bien faire comprendre l'invention, on va décrire, à titre d'exemple en se référant aux figures jointes en annexe, un mode de réalisation d'un collecteur d'admission suivant l'invention.

La figure 1 est une vue en coupe axiale longitudinale d'un collecteur d'admission d'air suivant l'invention.

La figure 2 est une vue en coupe transversale suivant 2-2 de la figure 1.

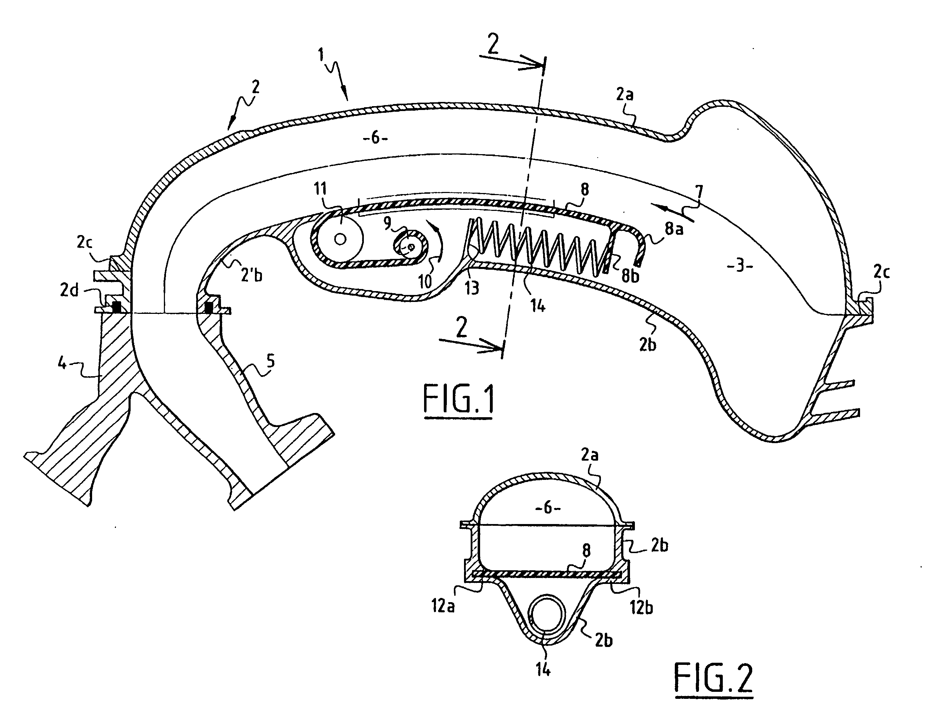

Sur la figure 1, on voit un collecteur d'admission suivant l'invention désigné de manière générale par le repère 1 qui comporte un corps de collecteur 2 de forme creuse et constitué par une coquille supérieure 2a et une coquille inférieure 2b rapportées et fixées l'une sur l'autre suivant une surface de jonction 2c.

Le corps de collecteur 2 comporte une cavité interne constituant, à l'une de ses extrémités, une chambre d'admission 3 ou plénum qui est alimentée en air par une tubulure d'entrée (non représentée) dans laquelle peut être disposé un papillon d'admission d'air.

A son extrémité opposée au plénum 3, le corps de collecteur 2 comporte une partie 2d de raccordement à la culasse 4 d'un moteur à combustion interne, suivant des tubulures d'admission telles que 5 d'air comburant dans un cylindre du moteur.

Par exemple, dans le cas d'un moteur à quatre cylindres, le collecteur d'admission 2 est relié à la culasse suivant les parties d'entrée de quatre tubulures d'admission d'air dans les quatre cylindres du moteur à combustion interne.

A l'intérieur du corps de collecteur 2 sont délimités des canaux d'admission d'air tels que 6 joignant chacun la zone d'admission d'air 3 du collecteur à une tubulure d'admission 5 d'un cylindre du moteur.

On ne décrira que l'un des canaux d'admission d'air 6, l'ensemble des canaux d'admission et par exemple les quatre canaux d'admission d'un moteur à quatre cylindres étant réalisé de manière identique.

Un canal d'admission d'air 6 comporte une paroi qui est constituée, dans sa partie supérieure, par une partie de la paroi de la coquille supérieure 2a du collecteur et, dans sa partie inférieure, par une portion de paroi fixe inférieure 2'b constituant, avec la paroi supérieure, l'extrémité aval du conduit d'admission 6, dans la direction 7 de circulation de l'air d'admission dans le collecteur, débouchant dans la tubulure d'admission 5 du cylindre du moteur.

Le conduit 6 comporte également une partie de paroi inférieure 8 réalisée suivant l'invention sous forme souple et de longueur réglable. La partie 8 de longueur réglable de la paroi inférieure du conduit d'admission 6 assure la jonction entre la partie d'entrée du conduit d'admission 6 communiquant avec la zone d'admission 3 du collecteur et la partie fixe aval de sortie 2'b du conduit d'admission 6. La partie souple 8 de longueur réglable de la paroi du conduit d'admission est constituée par une bande ou lame souple en un matériau tel qu'un élastomère ou un élastomère armé.

La lame souple 8 comporte une partie antérieure 8a recourbée constituant, avec une partie correspondante courbe, de la paroi supérieure 2a du collecteur, l'entrée du conduit 6 en communication directe avec la zone d'admission d'air 3 ou plénum du collecteur.

L'extrémité opposée de la lame souple 8, dans la direction longitudinale de la lame souple 8, est fixée sur un arbre ou rouleau 9 monté tourillonnant dans deux surfaces latérales de la coquille inférieure 2b du collecteur.

L'arbre 9 est relié, à l'extérieur du collecteur, à un moyen moteur permettant de le faire tourner dans le sens d'enroulement de la lame souple 8, comme indiqué par la flèche 10, pour réaliser l'enroulement de la lame souple 8 autour de l'arbre 9 ou, dans le sens inverse au sens indiqué par la flèche 10, pour réaliser le déroulement de la lame souple 8.

La lame souple 8, de forme générale rectangulaire, est guidée, sur ses côtés latéraux longitudinaux, par deux glissières 12a, 12b réalisées dans la surface interne de la coquille inférieure 2b du collecteur, dans une direction longitudinale axiale du conduit d'admission 6.

Entre son extrémité d'entrée 8a et son extrémité opposée fixée sur l'arbre d'enroulement et de déroulement 9, la bande souple 8 passe sur une poulie de renvoi 11 montée tourillonnante autour d'un axe parallèle à l'axe d'enroulement de la bande souple 8 dans les parois latérales de la coquille inférieure 2b du collecteur permettant de renvoyer la bande souple 8 en direction de l'axe d'enroulement 9 et d'assurer une jonction sensiblement étanche entre la bande souple 8 et l'extrémité de la partie fixe 2'b de la paroi inférieure du conduit d'admission 6.

Les bords latéraux de la lame souple 8 sont guidés par les glissières 12a et 12b de la coquille inférieure 2b du collecteur, sur une longueur suffisante pour assurer le maintien de la lame souple dans une position de fermeture de l'extrémité inférieure du conduit d'admission 6.

Dans une position située légèrement à l'arrière de sa partie d'extrémité 8a située suivant l'entrée du conduit d'admission, la lame souple 8 comporte une surface d'appui 8b perpendiculaire à la lame souple 8 et dirigée vers l'extérieur du conduit.

La coquille inférieure 2b du collecteur comporte une paroi d'appui 13 en saillie vers l'intérieur du collecteur délimitant vers l'amont, en considérant le sens de circulation 7 de l'air d'admission, un logement pour un ressort hélicoïdal 14 de rappel et de tension de la lame souple 8 intercalé entre la paroi en saillie 13 de la coquille inférieure 2b du collecteur et la partie en saillie 8b de la lame souple 8 et, en aval de la paroi 13 en saillie, un logement pour l'arbre d'enroulement 9, la partie enroulée de la lame souple 8 et la poulie de renvoi 11.

Le ressort 14 assure la mise en tension de la lame souple 8 constituant une paroi de longueur réglable du conduit d'admission 6 qui est maintenue dans sa position de service, à la fois par les glissières 12a et 12b du collecteur et par le ressort hélicoïdal de tension 14.

Le ressort 14 est maintenu suivant sa longueur par une partie annulaire de la paroi 2b délimitant le logement du ressort.

On va maintenant décrire le fonctionnement du collecteur d'admission suivant l'invention permettant de réaliser un réglage continu de la longueur du conduit d'admission 6, en fonction du régime du moteur à combustion interne.

L'axe d'enroulement 9 de la bande souple 8 est relié à un moyen moteur commandé à partir d'un moyen de réglage du régime de fonctionnement du moteur à combustion interne ou à partir d'un moyen de mesure du niveau de régime de fonctionnement du moteur à combustion interne.

Dans le cas d'un très bas régime de fonctionnement, la lame souple 8 est dans un état pratiquement totalement déroulé, la longueur du conduit 6, entre l'extrémité d'entrée 8a définie par l'extrémité de la lame souple 8 et la tubulure d'admission d'air 5 du moteur, étant maximale.

Dans le cas d'une augmentation du régime du moteur, le moyen moteur d'entraînement de l'arbre d'enroulement 9 réalise un enroulement de la lame souple 8, dans le sens de la flèche 10, ce qui produit un raccourcissement de la partie souple à longueur réglable de la paroi du conduit d'admission constitué par la lame souple 8 et un déplacement de la partie d'extrémité 8a de la lame souple 8 constituant la partie d'extrémité du conduit d'admission, dans le sens 7 de circulation des gaz d'admission. On obtient ainsi un raccourcissement du conduit d'admission 6, dans la direction axiale de circulation de l'air qui dépend du régime du moteur et une compression du ressort 14 qui assure une bonne tension de la lame souple 8.

Le raccourcissement progressif de la longueur axiale du conduit d'admission 6 est réalisé de manière continue en fonction de l'augmentation du régime de fonctionnement du moteur.

A haut régime, le moteur fonctionne avec un conduit d'admission 6 d'une longueur réduite tout à fait adaptée à un comportement acoustique satisfaisant du conduit d'admission.

Lorsqu'on diminue le régime du moteur, le dispositif d'entraînement de l'arbre d'enroulement 9 peut, soit être débrayé, le ressort 14 assurant alors le rappel de la bande souple 8 vers une position déroulée augmentant la longueur du conduit d'admission 6, ou encore le moyen moteur d'entraînement de l'arbre d'enroulement 9 peut être entraîné dans le sens opposé au sens indiqué par la flèche 10 pour assurer le déroulement de la bande souple 8. Dans tous les cas, la longueur du conduit d'admission augmente et s'adapte au régime du moteur évoluant vers les bas régimes.

Le dispositif suivant l'invention permet donc de régler de manière très précise et continue la longueur du conduit d'admission 6 au régime de fonctionnement du moteur à combustion interne, de manière que le fonctionnement acoustique du conduit d'admission soit toujours optimal en fonction des conditions de fonctionnement du moteur. On obtient alors un très bon remplissage en air du cylindre du moteur par l'intermédiaire de la tubulure d'admission 5 de la culasse 4.

L'invention ne se limite pas strictement au mode de réalisation qui a été décrit.

C'est ainsi que l'enroulement et le déroulement de la bande peuvent être obtenus aussi bien par le dispositif moteur d'entraînement de l'arbre d'enroulement et de déroulement que par le dispositif moteur et des moyens de rappel élastique tels que des ressorts.

La paroi souple 8 peut constituer tout ou partie de la paroi du conduit d'admission, la bande souple pouvant avoir une forme différente de la forme plane qui a été décrite.

Enfin, le collecteur d'admission d'air suivant l'invention peut s'appliquer à de nombreux moteurs à combustion interne utilisés sur des véhicules automobiles de types très variés.

## Revendications

1. Collecteur d'admission d'air d'un moteur à combustion interne d'un véhicule automobile comportant un corps de collecteur (2) délimitant une zone d'admission d'air (3) et au moins un conduit d'admission d'air (6) joignant la zone d'admission d'air (3) à une tubulure d'admission (5) d'air dans un cylindre du moteur, **caractérisé par le fait que** le conduit d'admission d'air (6) comporte une paroi dont une partie au moins de longueur réglable est constituée par un élément souple allongé (8) s'étendant suivant une direction longitudinale axiale (7) du conduit d'admission (6), à l'intérieur du collecteur (1), ayant une extrémité longitudinale aval, dans le sens (7) de circulation de l'air d'admission, en prise avec un moyen (9) d'ajustement de la longueur de l'élément souple (8) constituant la partie de longueur réglable de la paroi du conduit d'admission (6).

2. Collecteur suivant la revendication 1, **caractérisé par le fait que** l'élément souple allongé (8) est constitué par une lame souple en un matériau élastomère ou élastomère armé, sensiblement plane et de forme rectangulaire, engagé suivant deux côtés latéraux longitudinaux dans des glissières (12a, 12b) du corps de collecteur (2), disposées sur une partie au moins de la longueur de la partie souple réglable (8) de la paroi du conduit d'admission (6).

3. Collecteur suivant l'une quelconque des revendications 1 et 2, **caractérisé par le fait qu'**il comporte de plus au moins un ressort (14) de rappel et de tension de l'élément souple (8) intercalé entre une partie en saillie (13) vers l'intérieur d'une paroi du collecteur (2) et une partie d'appui (8b) de l'élément souple (8) sensiblement perpendiculaire à sa direction longitudinale axiale.

4. Collecteur suivant l'une quelconque des revendications 1 à 3, **caractérisé par le fait que** le moyen d'ajustement (9) de la longueur de l'élément souple (8) constituant la partie de longueur réglable de la paroi du conduit d'admission (6) est constitué par un axe (9) d'enroulement de l'élément souple allongé (8) relié à un moyen moteur d'entraînement, au moins dans un sens (10) permettant l'enroulement de l'élément souple (8) sur l'axe d'enroulement (9).

5. Collecteur suivant la revendication 4, **caractérisé par le fait qu'**il comporte de plus une poulie (11) montée rotative à l'intérieur du corps de collecteur (2) autour d'un axe parallèle à l'axe d'enroulement de la bande souple (8), de manière à assurer le renvoi de la bande souple (8), à l'extrémité de la partie de longueur réglable de la paroi du conduit d'admission (6), vers l'axe d'enroulement (9) et le maintien de la bande souple (8), en contact sensiblement étanche avec une partie (2'b) du corps de collecteur (2) constituant une partie fixe d'extrémité aval de la paroi du conduit d'admission (6).

## Patentansprüche

1. Saugrohr für eine Brennkraftmaschine eines Kraftfahrzeugs mit einem Saugrohrkörper (2), der eine Luftansaugzone (3) und mindestens einen Luftansaugkanal (6) bildet, welcher die Luftansaugzone (3) mit einem Luftansaugstutzen (5) in einem Zylinder des Motors verbindet, **dadurch gekennzeichnet, dass** der Luftansaugkanal (6) eine Wand aufweist, von der ein Abschnitt mit zumindest einstellbarer Länge aus einem verlängerten flexiblen Bauelement (8) gebildet ist, das sich längs einer axialen Längsrichtung (7) des Luftansaugkanals (6) in das Innere des Saugrohrs (1) erstreckt, wobei es in Strömungsrichtung (7) der Luftansaugung stromabwärts ein Längsende aufweist, welches mit einer Längeneinstelleinrichtung (9) für das flexible Bauelement (8) in Eingriff steht, das den Abschnitt mit einstellbarer Länge der Wand des Luftansaugkanals (6) bildet.

2. Saugrohr nach Anspruch 1, **dadurch gekennzeichnet, dass** das verlängerte flexible Bauelement (8) aus einem biegsamen Streifen aus einem Elastomerwerkstoff oder aus einem armierten Elastomerwerkstoff gebildet ist, der im Wesentlichen plan ist und eine rechteckige Gestalt aufweist, wobei er entlang von zwei seitlichen Längsseiten mit Gleitschienen (12a, 12b) des Saugrohrkörpers (2) in Eingriff ist, welche auf einem Abschnitt von zumindest der Länge des einstellbaren flexiblen Abschnitts (8) der Wand des Ansaugkanals (6) angeordnet sind.

3. Saugrohr nach einem der Ansprüche 1 und 2, **dadurch gekennzeichnet, dass** es weiterhin mindestens eine Feder (14) zum Rückzug und zur Spannung des flexiblen Bauelementes (8) aufweist, welche zwischen einem von einer Wand des Saugrohrs (2) ins Innere hervorstehenden Abschnitt (13) und einem Auflagerabschnitt (8b) des flexiblen Bauelementes (8) eingebracht ist, der im Wesentlichen senkrecht zu seiner axialen Längsrichtung angeordnet ist.

4. Saugrohr nach einem der Ansprüche 1 bis 3, **dadurch gekennzeichnet, dass** die Längenverstelleinrichtung (9) des flexiblen Bauelementes (8), welches den Abschnitt der einstellbaren Länge der Wand des Ansaugkanals (6) bildet, aus einem Wickelkern (9) für das verlängerte flexible Bauelement (8) gebildet ist, der mit einer Antriebsmotoreinrichtung in Verbindung steht, welche zumindest in einer Richtung (10) die Aufwicklung des flexiblen Bauelementes (8) auf dem Wickelkern (9) ermöglicht.

5. Saugrohr nach Anspruch 4, **dadurch gekennzeichnet, dass** es weiterhin eine Rolle (11) aufweist, die im Inneren des Saugrohrkörpers (2) drehbar um eine parallel zum Wickelkern des flexiblen Bands angeordnete Achse so eingebaut ist, dass die Rückstellung des flexiblen Bands (8) am Ende des Abschnitts der einstellbaren Länge der Wand des Ansaugkanals (6) zum Wickelkern (9) hin und das Beibehalten einer im Wesentlichen dichten Berührung des flexiblen Bands (8) mit einem Abschnitt (2'b) des Saugrohrkörpers (2) sichergestellt ist, welcher einen festen Endabschnitt der Wand des Ansaugkanals (6) stromabwärts bildet.

## Claims

1. Air intake manifold for an internal combustion engine of a motor vehicle, comprising a manifold body (2) delimiting an air intake zone (3) and at least one air inlet pipe (6) connecting the air intake zone (3) to an air inlet duct (5) that lets air into a cylinder of the engine, **characterized in that** the air inlet pipe (6) has a wall at least an adjustable length part of which is made of an elongate flexible element (8) extending in an axial longitudinal direction (7) of the inlet pipe (6), inside the manifold (1), having a downstream longitudinal end, in the direction (7) in which the intake air flows, in engagement with a means (9) of adjusting the length of the flexible element (8) that makes up the adjustable-length part of the wall of the inlet pipe (6).

2. Manifold according to Claim 1, **characterized in that** the elongate flexible element (8) consists of a flexible leaf of an elastomeric or reinforced elastomeric material, which is more or less flat and of rectangular shape, engaged on two longitudinal lateral sides in slideways (12a, 12b) of the manifold body (2) which slideways are arranged over at least part of the length of the adjustable flexible part (8) of the wall of the inlet pipe (6).

3. Manifold according to either one of Claims 1 and 2, **characterized in that** it additionally comprises at least one spring (14) for returning and tensioning the flexible element (8) and inserted between an inwardly projecting part (13) of a wall of the manifold (2) and a bearing part (8b) of the flexible element (8) roughly perpendicular to its axial longitudinal direction.

4. Manifold according to any one of Claims 1 to 3, **characterized in that** the means (9) for adjusting the length of the flexible element (8) constituting the adjustable-length part of the wall of the inlet pipe (6) consists of a pin (9) around which the elongate flexible element (8) is wound, and connected to a drive motor means, driven in at least one direction (10), allowing the flexible element (8) to be wound onto the winding pin (9).

5. Manifold according to Claim 4, **characterized in that** it additionally comprises a pulley (11) mounted to rotate inside the manifold body (2) about an axis parallel to the pin around which the flexible strip (8) is wound, so as to return the flexible strip (8), at the end of the adjustable-length part of the wall of the inlet pipe (6), towards the winding pin (9) and keep the flexible strip (8) in practically sealed contact with a part (2'b) of the manifold body (2) that constitutes a fixed, downstream-end part of the wall of the inlet pipe (6).
